# EUROPEAN PATENT APPLICATION

(11) **EP 2 609 815 A1**
(43) Date of publication of application: **03.07.2013**
(21) Application number: 11820075.7
(22) Date of filing: 25.08.2011
(51) Int. Cl.: A23L 1/325

(54) **PROCESS FOR PRODUCTION OF FISH PASTE PRODUCT, AND ENZYME PREPARATION FOR MODIFYING FISH PASTE PRODUCT**

(30) Priority: 27.08.2010 JP 2010190479
(71) Applicant: Ajinomoto Co., Inc., Tokyo 104-8315 (JP)
(72) Inventor: SATO, Hiroaki, Kawasaki-shi Kanagawa 210-8681 (JP)
(74) Representative: Strehl Schübel-Hopf & Partner
(86) International application number: PCT/JP2011/069862
(87) International publication number: WO 2012/026618

(57) **Abstract**

A fish paste product imparted with firmness and flexibility can be obtained using transglutaminase, an alkali material, and an ascorbic acid compound.

## Description

### TECHNICAL FIELD

The present invention relates to a process for production of a fish paste product comprising using transglutaminase, an alkali material, and an ascorbic acid compound and also to an enzyme preparation for modifying a fish paste product.

### BACKGROUND ART

Fish paste products such as boiled fish paste cakes have been widely eaten as traditional food products in Japan. However, recently, with growing concerns about health, the popularity of the fish paste products has been increasing even in foreign countries including Europe and North America, and so on, a lot of fish paste products have been consumed, and the price of surimi which is a raw material for fish paste products has been rising. Accordingly, various attempts have been made for the purpose of reducing the raw material costs, and it is the present situation that the costs are suppressed by a method of reducing a blending amount of surimi and increasing the amount of water to be added, or a method of replacing high-grade surimi by low-grade surimi. In many cases, such surimi is still poor in terms of quality, so that a problem that it may be impossible to thoroughly reproduce the elasticity inherent in the boiled fish paste cakes is generated. Furthermore, in order to reinforce the firmness and flexibility, starch, vegetable protein, albumen, and the like are used as auxiliary raw materials. However, there is involved such a problem that not only the reinforcing effect is not sufficient, but the flavor is strongly influenced.

In the preceding knowledge, it is described that when ascorbic acid is added to surimi, an effect for enhancing the gel strength is obtained, and that an optimal addition amount of ascorbic acid is 0.2 % relative to the surimi *(*Surimi Technology, page 291 (published by Marcel Dekker, Inc., 1992)). However, as a result of investigations made by the present inventors, under the present investigation condition, it has been confirmed that in a product having 0.2 % of ascorbic acid added thereto, both "firmness" and "flexibility" are not enhanced so much. In addition, it has been reported that by producing a tube-shaped fish paste cake using natural calcium and sodium ascorbate, the flexibility and elasticity can be enhanced (JP-A-1-273566). However, the effect is still insufficient.

It has been confirmed that by combining transglutaminase with an alkali metal salt, it is possible to produce a paste product capable of keeping shape retention and moldability having elasticity from low-grade surimi (JP-A-6-113769). Furthermore, it has been confirmed that by combining transglutaminase with an alkali metal salt and modified starch, it is possible to obtain a boiled fish paste cake which is flexible and strong in terms of elasticity, and that the water release is suppressed (Japanese Patent No. 3458478). In addition, it is also disclosed that when transglutaminase and an ascorbic acid compound are added to surimi, not only an effect for enhancing the gel strength is obtained, but changes in physical properties of nerimi during the production of a fish paste product can be suppressed (WO 2009/116662).

These methods use transglutaminase that is a protein crosslinking enzyme which is considered to be one of causes for making "ashi" as a texture inherent in the boiled fish paste cakes, a considerable effect is seen in the effect for imparting the physical properties, and it becomes possible to obtain high-grade fish paste products. But, it is the present situation that in many cases, a recipe for the fish paste product to be used is one in which a blending ratio of surimi is relatively high, or a middle-grade to high-grade surimi raw material is used, as in products produced in Japan. In boiled fish paste cakes having a low blending ratio of surimi, or boiled fish paste cakes using low-grade surimi, as in products produced in Europe and North America, etc., since the amount and quality of the protein serving as a substrate are lowered, the effects of these techniques are hardly revealed. Accordingly, in the fish paste products, even by adopting any of the foregoing techniques, it may be impossible to sufficiently impart the required firmness and flexibility, and more improvements are demanded.

### DISCLOSURE OF THE INVENTION

An obj ect of the present invention is to provide a process for production of a fish paste product, in which even at the time of using lower-grade surimi, or reducing an amount of raw material surimi and increasing the amount of water to be added, firmness and flexibility can be imparted to the fish paste product, and an enzyme preparation for production of a fish paste product. More specifically, an object of the present invention is to provide a process for production of a fish paste product having sufficient "firmness" and "flexibility" and to provide an enzyme preparation to be used for the production of a fish paste product having sufficient "firmness" and "flexibility".

The present inventors made extensive and intensive investigations. As a result, it has been found that the foregoing object can be thoroughly achieved by using transglutaminase, an alkali material, and an ascorbic acid compound, leading to accomplishment of the present invention. Specifically, the present invention is as follows.
(1) A process for production of a fish paste product comprising using transglutaminase, an alkali material, and an ascorbic acid compound.
(2) The process according to (1), wherein an amount of the transglutaminase is from 0.002 to 1. 0 U per gram of raw material surimi, an amount of the alkali material is from 0.00003 g to 0.02 g per gram of raw material surimi, and an amount of the ascorbic acid compound is from 0.000002 g to 0.01 g per gram of raw material surimi.
(3) The process according to (1), wherein an amount of the transglutaminase is from 0.005 to 1.0 U per gram of raw material surimi; an amount of the alkali material is from 0.00003 g to 0. 005 g per gram of raw material surimi; and the ascorbic acid compound is sodium ascorbate, and an amount of the sodium ascorbate is from 0.000005 g to 0.01 g per gram of raw material surimi.
(4) The process according to (1), wherein an amount of the transglutaminase is from 0.2 to 500,000 U per gram of the ascorbic acid compound, and an amount of the alkali material is from 0.003 to 10, 000 g per gram of the ascorbic acid compound.
(5) The process according to (1), wherein an amount of the transglutaminase is from 0.2 to 200,000 U per gram of the ascorbic acid compound, and an addition amount of the alkali material is from 0.003 to 1,000 g per gram of the ascorbic acid compound.
(6) The process according to (1), wherein the alkali material is sodium carbonate.
(7) The process according to (1), wherein an amount of raw material surimi to be used for the production of a fish paste product is 30 g or more and less than 40.0 g based on 100 g of a total sum of all of raw materials.
(8) The process according to (1), wherein Alaska pollack, golden threadfin bream, golden threadfin bream, or a mixture thereof is used as raw material surimi.
(9) An enzyme preparation for modifying a fish paste product containing transglutaminase, an alkali material, and an ascorbic acid compound as active ingredients.
(10) The enzyme preparation according to (9), wherein an amount of the transglutaminase is from 0.2 to 500,000 U per gram of the ascorbic acid compound, and an amount of the alkali material is from 0.003 to 10,000 g per gram of the ascorbic acid compound.
(11) The enzyme preparation according to (9), wherein an amount of the transglutaminase is from 0.2 to 200,000 U per gram of the ascorbic acid compound, and an addition amount of the alkali material is from 0.003 to 1,000 g per gram of the ascorbic acid compound.
(12) The enzyme preparation according to (9), wherein the ascorbic acid compound is sodium ascorbate, and the alkali material is sodium carbonate.

As the transglutaminase which is used in the present invention, those derived from mammals (see JP-B-1-50382), those derived from fishes (see Japanese Society of Fisheries Science, Heisei 3 (1991) Autumnal Conference, Proceedings, page 180), those derived from plants, those derived from microorganisms (see JP-A-1-27471 and JP-A-11-75876), those produced by gene recombination (see JP-A-1-300899), and so on are known. However, any transglutaminase may be used irrespective of its source. Microorganism-derived transglutaminase which is commercially available from Aj inomoto Co., Inc. under a trade name "ACTIVA" TG is an example thereof.

The alkali material which is used in the present invention is not particularly limited so far as it is useful as a food material or a food additive, and examples thereof include alkaline inorganic salts such as sodium hydroxide, sodium carbonate, sodium hydrogen carbonate, sodium citrate, calcium carbonate, calcium oxide, calcium hydroxide, calcinated calcium, and trisodium phosphate, polyphosphates such as sodium pyrophosphate, tripolyphosphoric acid, and sodium metaphosphate, basic amino acids such as lysine, arginine, and histidine, and the like. Of these, in view of strength of alkalinity, favorable texture, and the like, sodium carbonate is the most adequate alkali material. In particular, at the time of using Alaska pollack as a raw material, sodium carbonate is an alkali material having the strongest function to enhance physical properties.

Examples of the ascorbic acid compound which is used in the present invention include ascorbic acid, sodium ascorbate, calcium ascorbate, ascorbic acid 2-glucoside, ascorbyl palmitate, ascorbyl stearate, and the like. Any of these compounds may be used so far as they are of a food grade which can be used for food products. Sodium ascorbate is the most preferable in view of taste and the like.

The fish paste product according to the present invention is one made of surimi of a seafood as a raw material, and examples thereof include boiled fish paste cakes, deep-fried fish paste cakes, tube-shaped fish paste cakes, imitation crab meat, fish sausages, naruto-maki, hanpen, boiled fish paste cakes of eel fry, fishballs from fish meat, datemaki fish-paste omelet, Chinese steamed dumplings, and the like.

The raw material surimi as referred to in the present invention means seafood processed in a paste form, which is used as a raw material for the fish paste products.

As a fish species which is used for the raw material surimi, Alaska pollack, golden threadfin bream, Atlantic cutlassfish, Atka mackerel, lizard fish, shark, sardine, cuttlefish, and the like are general, but any kind of seafood is usable. In particular, even in the case of using low-grade surimi of a warm water fish species, including golden threadfin bream, lizard fish, and the like, the present invention exhibits the effects and imparts sufficient firmness and flexibility to the fish paste products.

In addition, the present invention also exhibits the effects in a system in which a blending amount of the raw material surimi is reduced, and the amount of water to be added is increased. For example, even in the case of a low blending amount of the raw material surimi, in which the blending amount of the raw material surimi is from 25 to 45 g, preferably from 30 to 45 g, more preferably 30 g or more and less than 40.0 g, and still more preferably from 30 to 35 g relative to 100 g of the raw materials (a total sum of the respective raw materials of the fish paste product, including surimi, seasonings, water, starch, and the like), the effects are exhibited.

In the process for production of a fish paste product according to the present invention, a method for adding an ascorbic acid compound, transglutaminase, and an alkali material is not particularly limited so far as these materials are added to the raw material surimi prior to a heating step such as a deep frying step and a steaming step, and also, the addition order thereof is not particularly limited. For example, an enzyme preparation having an ascorbic acid compound, transglutaminase, and an alkali material blended therein may be prepared and then added to and mixed with the raw material surimi together with or separately from other raw materials such as salt and seasonings. Alternatively, an ascorbic acid compound, transglutaminase, and an alkali material may be separately added to and mixed with the raw material surimi together with or separately from other raw materials such as salt and seasonings, without preparing an enzyme preparation.

In the process for production of a fish paste product according to the present invention, an amount of the transglutaminase is preferably from 0.002 to 1.0 U, more preferably from 0.005 to 1.0 U, and still more preferably from 0.01 to 0.5 U per gram of the raw material surimi. In the case where the surimi raw material is a fish species living in cold water, such as Alaska pollack, the amount of the transglutaminase is preferably from 0.002 to 1.0 U, and more preferably from 0.005 to 1.0 U per gram of the raw material surimi. In the case where the surimi raw material is a fish species living in warm water, such as golden threadfin bream or lizard fish, the amount of the transglutaminase is preferably from 0.01 to 1.0 U, and more preferably from 0.01 to 0.5 U per gram of the raw material surimi. Incidentally, the activity unit of the transglutaminase is measured by the following hydroxamate method and defined. That is, the transglutaminase is allowed to act in a tris buffer having a pH of 6.0 at a temperature of 37°C in a reaction system composed of, as a substrate, benzyloxycarbonyl-L-glutamylglycine and hydroxylamine. The produced hydroxamic acid is converted into an iron complex in the presence of trichloroacetic acid. Subsequently, an absorbance at 525 nm is measured, thereby determining an amount of hydroxamic acid from a calibration curve. An amount of the enzyme at which 1 µmole of hydroxamic acid is produced for one minute is defined as the activity unit of the transglutaminase, namely, one unit (1U) (see JP-A-64-27471).

In the process for production of a fish paste product according to the present invention, an amount of the ascorbic acid compound is preferably from 0.000002 g to 0.01 g, and more preferably from 0.000005 g to 0.01 g per gram of the raw material surimi.

In the process for production of a fish paste product according to the present invention, an amount of the alkali material is preferably from 0.00003 g to 0.03 g, more preferably from 0.00003 g to 0.02 g, and still more preferably from 0. 00003 to 0.005 g per gram of the raw material surimi. In the case where the surimi raw material is a fish species living in cold water, such as Alaska pollack, the amount of the alkali material is preferably from 0.00003 g to 0.03 g, and more preferably from 0.00003 g to 0.02 g per gram of the raw material surimi. In the case where the surimi raw material is a fish species living in warm water, such as golden threadfin bream or lizard fish, the amount of the alkali material is preferably from 0.00003 g to 0.01 g, and more preferably from 0.00003 g to 0.005 g per gram of the raw material surimi. With respect to an amount ratio of the transglutaminase, the alkali material, and the ascorbic acid compound which are used in the process for production of a fish paste product according to the present invention and an adequate amount ratio of the transglutaminase, the alkali material, and the ascorbic acid compound in the enzyme preparation according to the present invention, the amount of the transglutaminase is preferably from 0.2 to 500,000 U, more preferably 0.2 to 200,000 U, still more preferably from 1.0 to 100,000 U, and especially preferably from 10.0 to 6,000 U per gram of the ascorbic acid compound. The amount of the alkali material such as sodium carbonate is preferably from 0.003 to 15,000 g, more preferably from 0.003 to 10,000 g, still more preferably from 0.003 to 1,000 g, and especially preferably from 0.05 to 100 g per gram of the ascorbic acid compound such as sodium ascorbate.

An enzyme preparation for fish paste products can be obtained by mixing the transglutaminase, the alkali material, and the ascorbic acid compound with a bulking agent such as dextrin and starch, a saccharide such as glucose, an oxidoreductase such as glucose oxidase and ascorbate oxidase, a protein partial hydrolyzate, an emulsifier, a reducing agents such as glutathione and cysteine, and other food additives. The enzyme preparation according to the present invention may be in any form of a liquid, a paste, a granule, or a powder.

### BEST MODES FOR CARRYING OUT THE INVENTION

The present invention is hereunder described in more detail with reference to the following Examples. It should not be construed that the present invention is limited to these Examples.

### EXAMPLE 1

In boiled fish paste cake manufacturers in Europe, surimi of golden threadfin bream or lizard fish as a warm water fish species to be caught in a warm sea of Thailand, India, or the like is frequently used. It is known that when processed into a boiled fish paste cake, surimi of a tropical fish that is a fish species living in such warm water is poorer in terms of quality such as gel strength and color than surimi of Alaska pollack or the like as a fish species living in cold water, which is chiefly used in Japan and U.S.A. Furthermore, the blending ratio of the surimi is low as from 30 % to 40 % as compared with that used in Japanese boiled fish paste cakes as high as 45 % or more based on a total weight of all of raw materials. In the present Example, casing boiled fish paste cakes in which three kinds of materials of transglutaminase, an alkali material, and an ascorbic acid compound were added were prepared by adopting a blend formulation for a imitation crab meat used in a low blending ratio of surimi of 35 % of low-grade surimi (golden threadfin bream or lizard fish) shown in Table 1 in a method described below in detail. 1,750 g of crushed frozen surimi was measured and thawed at room temperature for 30 minutes. The surimi in a partially unfrozen state was finely cut by a Stephan cutter (STEPHAN UM12, manufactured by STEPHAN). The cut surimi was first stirred at a low speed for one minute, the stirring speed was changed to a high speed, and the stirring was continued for 2 minutes. To the resulting surimi in a grounded state, salt and half the amount of ice water were added, and the mixture was stirred at a low speed for 30 seconds. When the mixture started getting uniform as a whole, the stirring speed was changed to a high speed, and the stirring was continued for 3 minutes. To the stirred surimi, "AJINOMOTO" (MSG), starch, an albumen power, soybean protein, safflower oil, and the remaining ice water were added, and the mixture was stirred at a low speed for 30 seconds. When the mixture started getting uniform as a whole, the stirring speed was changed to a high speed. After changing the stirring speed to a high speed, at the time when the temperature of the kneaded surimi reached about 15°C, the stirring was stopped. The surimi in this state is called nerimi. The obtained nerimi was divided into bowls, and stirring was performed with a spatula for one minute. To the nerimi, 0.068 U of "ACTIVA" TG (1,000 U/g, manufactured by Ajinomoto Co., Inc.) that is a transglutaminase preparation (hereinafter sometimes referred to as "TG"), 0.00192 g of sodium carbonate (hereinafter sometimes referred to as "Na carbonate"), and 0.00024 g of sodium ascorbate (hereinafter sometimes referred to as "ASNa") per gram of the raw material surimi were added in a sole state of each of the materials or a preparation in which two kinds of materials were used in combination, or in a state of an enzyme preparation obtained by mixing three kinds of materials (in that case, the amount of transglutaminase is 283.3 U, and the amount of sodium carbonate is 8 g per gram of sodium ascorbate), and then mixed with a spatula for one minute. This nerimi was charged in a casing film, heated at 85°C for 20 minutes, and then cooled to obtain a casing boiled fish paste cake.

**Table 1**

| Raw material name | Blending ratio | Relative to surimi | Blending amount (g) |
|---|---|---|---|
| Surimi (golden threadfin bream, lizard fish) | 35.0% | 100.0 % | 1750 |
| Starch (potato, wheat, and tapioca) | 10.0% | 28.6% | 500 |
| Foreign protein (soybean and albumen) | 3.0% | 8.6 % | 150 |
| Seasoning (salt, AJINOMOTO^{®}, and safflower oil) | 5.0% | 14.3% | 250 |
| Ice water 1 (added simultaneously at the time of adding salt) | 23.5% | 67.1 % | 1175 |
| Ice water 2 (added simultaneously at the time of adding seasoning) | 23.5% | 67.1 % | 1175 |
| Total | 100% | 285.7% | 5000 |

The obtained casing boiled fish paste cake was subjected to sensory evaluation and physical property evaluation with a texture analyzer (TA-XT2i, manufactured by EKO Instruments Co., Ltd.). With respect to two items of "firmness" and "flexibility", the sensory evaluation was performed by four panelists by rating in increments of 0.5 while taking a non-added sample as score 0, with score 5 being a maximum. The "firmness" indicates a stress perceived at the time of biting, and the "flexibility" is defined as a distance until the biting-off occurred. The definition was made in such a manner that score 1 indicates "slight difference", score 2 indicates "difference", score 3 indicates "significant difference", score 4 indicates "more significant difference", and score 5 indicates "very significant difference". Incidentally, a test sample where a difference of score 2 or more was perceived is designated as "○", and a test sample where a more significant difference of score 3 or more was perceived is designated as "○○". With respect to the physical property measurement, "breaking strength" that is an index of the "firmness" and "breaking distance" that is an index of the "flexibility" were measured. With respect to the "breaking strength", in comparison with a non-added sample, a test sample where a difference of 20 g or more was confirmed is designated as "o", and a test sample where a significant difference of 30 g or more was confirmed is designated as "oo". With respect to the "breaking distance", a test sample where a difference of 0.5 mm or more was confirmed is designated as "o", and a test sample where a significant difference of 1.0 mm or more was confirmed is designated as "oo".

The sensory evaluation results are shown in Table 2. As shown in Table 2, in the case of a sole use of TG, sodium carbonate, or sodium ascorbate, though the effects for enhancing "firmness" and "flexibility" were brought, the difference in the sensory evaluation was less than score 1, and in any of these cases, the effects were insufficient. In the case of a use of two kinds of materials in combination, when TG and Na carbonate were used in combination, in the sensory evaluation, though a difference was perceived in terms of "flexibility", the "firmness" was perceived as a slight difference, so that it is still insufficient. On the other hand, in the added sample where three kinds of materials were used in combination, in the sensory evaluation, not only a significant difference was exhibited in terms of "firmness", but a difference was exhibited in terms of "flexibility". Furthermore, as shown in Table 3, as compared with a total value (additive value) led out from the case of a sole use of a material or a use of two kinds of materials in combination, in the case of a use of three kinds of materials in combination, a higher value was exhibited, and a significant and synergistic effect was perceived.

**Table 2**

| Test Sample | Firmness (score) | | Flexibility (score) | |
|---|---|---|---|---|
| Not added | 0.00 | | 0.00 | |
| TG | 0.50 | | 0.13 | |
| Na carbonate | 0.38 | | 0.50 | |
| ASNa | 0.63 | | 0.50 | |
| TG and Na carbonate | 1.50 | | 2.00 | o |
| Na carbonate and ASNa | 1.25 | | 1.00 | |
| ASNa and TG | 1.38 | | 1.00 | |
| Three kinds | 3.75 | oo | 2.88 | o |

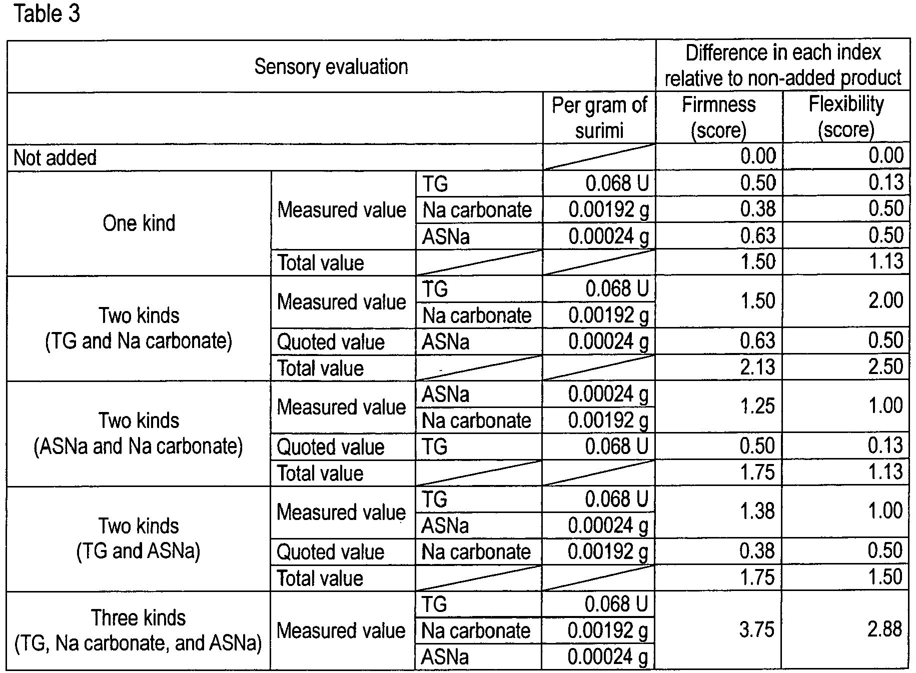

The physical property measurement results are shown in Table 4. It is noted from Table 4 that in a sample added with TG, the breaking strength was slightly enhanced, and in a sample added with sodium carbonate, the breaking distance was slightly enhanced; however, in any of these samples, physical properties such that some difference was felt were not revealed yet. In the case of a use of two kinds of materials in combination, when TG and Na carbonate were used in combination, a difference was perceived in terms of both of the breaking strength and the breaking distance; when Na carbonate and sodium ascorbate were used in combination, a difference was perceived in terms of the breaking distance; and when sodium ascorbate and TG were used in combination, a difference was perceived in terms of the breaking strength. Certainly, even in the case of a use of two kinds of materials in combination, the effects are perceived; however, in a sample where three kinds of materials were used in combination, a significant difference can be perceived in terms of both of the breaking strength and the breaking distance, and stronger physical properties can be imparted. Furthermore, as shown in Table 5, as compared with a total value (additive value) led out from the case of a sole use of a material or a use of two kinds of materials in combination, in the case of a use of three kinds of materials in combination, a higher value was exhibited, and a significant and synergistic effect was perceived. It was confirmed from the foregoing results that by using TG, an ascorbic acid compound, and an alkali material in combination, it is possible to produce a fish paste product having strong "firmness" and "flexibility".

**Table 4**

| Test Sample | Breaking strength (g) | | Breaking distance (mm) | |
|---|---|---|---|---|
| Not added | 220.96 | | 6.00 | |
| TG | 226.73 | | 5.93 | |
| Na carbonate | 212.45 | | 6.46 | |
| ASNa | 217.27 | | 6.09 | |
| TG and Na carbonate | 233.30 | o | 6.97 | o |
| Na carbonate and ASNa | 214.25 | | 6.55 | o |
| ASNa and TG | 232.83 | o | 6.39 | |
| Three kinds | 254.34 | oo | 7.16 | o |

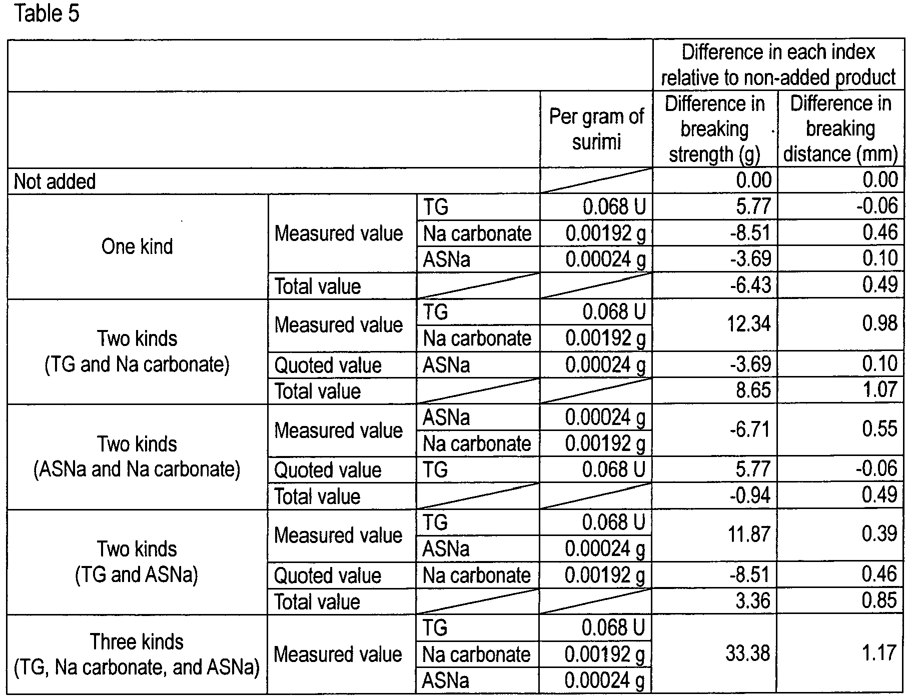

### EXAMPLE 2

Similar to Europe, in U.S.A., a blending ratio of surimi is frequently low as from 30 % to 40 %; however, in many cases, high-grade surimi of a fish species living in cold water, such as Alaska pollack, is used. On the other hand, in Europe and East Asia and Southeast Asia other than Japan, in many cases, low-grade surimi of a fish species living in warm water, such as golden threadfin bream, is used. In the present Example, it was carried out to specify an addition range where even in the case of using any of the foregoing surimi species, a synergistic effect due to a use of transglutaminase, an alkali material, and an ascorbic acid compound in combination explicitly appears.

Casing boiled fish paste cakes were prepared by adopting a blend for imitation crab meat shown in Table 6 as used in Example 1 in the same method as that in Example 1. With respect to a cost-saving recipe having a blending ratio of surimi of 35 %, in which cost saving was contrived to achieve by reducing the surimi by 5 % relative to a target product recipe having a blending ratio of surimi of 40 % prior to cost saving, it was confirmed on whether or not the physical properties were enhanced to an extent equal to or more than those in the target product by the addition of three kinds of materials of transglutaminase, an alkali material, and an ascorbic acid compound. As TG, Na ascorbate, and sodium carbonate, the same materials as those in Example 1 were used. As to the fish species, only Alaska pollack or only golden threadfin bream was used. The measurement of the addition effect was carried out in terms of the breaking strength that is an index of physical property evaluation exhibiting the firmness which is the most important index for the boiled fish paste cakes. For the measurement of the breaking strength, the same texture analyzer as that in Example 1 was used.

**Table 6**

| | Target recipe (blending ratio of surimi: 40 %) | | | Cost-saving recipe (blending ratio of surimi: 35 %) | | |
|---|---|---|---|---|---|---|
| Raw material name | Blending ratio | Relative to surimi | Blending amount (g) | Blending ratio | Relative to surimi | Blending amount (g) |
| Surimi (Alaska pollack or golden threadfin bream) | 40.0% | 114.3% | 2000 | 35.0% | 100.0% | 1750 |
| Starch (potato, wheat, and tapioca) | 10.0 % | 28.6% | 500 | 10.0% | 28.6% | 500 |
| Foreign protein (soybean and albumen) | 3.0% | 8.6% | 150 | 3.0% | 8.6% | 150 |
| Seasoning (salt,AJINOMOTO^{®}, and safflower oil) | 5.0% | 14.3% | 250 | 5.0% | 14.3% | 250 |
| Ice water 1 (added simultaneously at the time of adding salt) | 21.0 % | 60.0% | 1050 | 23.5% | 67.1% | 1175 |
| Ice water 2 (added simultaneously at the time of adding seasoning) | 21.0% | 60.0% | 1050 | 23.5% | 67.1% | 1175 |
| Total | 100% | 285.7 % | 5000 | 100% | 285.7% | 5000 |

Physical properties of the target product fabricated with a recipe having a blending ratio of surimi of 40 % and the non-added product fabricated with a recipe having a blending ratio of surimi of 35 % are shown in Table 7. As a result, physical properties equal to or more than those of the target recipe are exhibited so far as the breaking strength of Alaska pollack is 265 g or more, or the breaking strength of golden threadfin bream is 255 g or more. Therefore, this value was defined as target physical properties at the time of using each fish species.

**Table 7**

| Contents | Cost-saving product | Target product |
|---|---|---|
| Content ratio of surimi | 35% | 40% |
| Breaking strength of product not added with Alaska pollack (g) | 239.13 | 264.88 |
| Breaking strength of product not added with golden threadfin bream (g) | 229.08 | 254.40 |

With respect to the obtained data regarding the breaking strength, on the basis of the results obtained in a sample added with only TG, a sample added with only Na ascorbate, and a sample added with only Na carbonate, a theoretical breaking strength in a sample added with three kinds of materials in combination was calculated and analyzed. For example, as shown in Table 8, in the case of Test Sample 58 added with 0.068 U of TG per gram of surimi, 0.00024 g of Na ascorbate per gram of surimi, and 0.00192 g of Na carbonate per gram of surimi, a sum of a change in the breaking strength of Test Sample 5 added with 0.00024 g of Na ascorbate per gram of surimi relative to a non-added sample, a change in the breaking strength of Test Sample 12 added with 0.068 U of TG per gram of surimi relative to a non-added sample, and a change in the breaking strength of Test Sample 18 added with 0.00192 g of Na carbonate per gram of surimi relative to a non-added sample is a theoretical value of a change in the breaking strength of Test Sample 58 relative to a non-added sample. It is meant that in a measured value of Test Sample 58, if the breaking strength relative to the control is equal to this theoretical value, a result in accordance with the theory, namely an additive effect is brought, and if the breaking strength is larger than the theoretical value, an effect exceeding the theory, namely a synergistic effect is brought. In all of test samples using three kinds of materials in combination including Test Samples 19 to 90, in which the foregoing method was adopted, the amount of Na carbonate was fixed, and the amount of each of transglutaminase and Na ascorbate was changed, the synergistic effect regarding the breaking strength was analyzed. Furthermore, comparison with the target product in terms of the physical properties was carried out.

In Test Samples 19 to 90 as a sample using TG, Na ascorbate, and Na carbonate in combination, the synergistic effect was analyzed. It was confirmed from Table 9 that in the case of a use of Alaska pollack as a fish species, the synergistic effect was confirmed in the test samples marked with "*". Furthermore, the test samples having physical properties exceeding 265 g, a value of which is the breaking strength of the target product having a blending ratio of surimi of 40 %, are shown gray.

Furthermore, it was confirmed from Table 10 that in the case of a use of golden threadfin bream as a fish species, the synergistic effect was confirmed in the test samples marked with "*". Furthermore, the test samples having physical properties exceeding 255 g, a value of which is the breaking strength of the target product having a blending ratio of surimi of 40 %, are shown gray. In the case of golden threadfin bream, when the breaking strength exceeded 300 g in the amount of TG of 0.1 U or more per gram of surimi, a hard texture was given, leading to undesirable results for natural elasticity of the boiled fish paste cake.

It is noted from Tables 9 and 10 that in the case of a use of any of Alaska pollack and golden threadfin bream, in all of test samples in regions which are not only shaded gray, wherein the target physical properties were achieved, but marked with "*" exhibiting the synergistic effect, namely, regions in which the addition ratio of TG is from 0.01 to 0.5 U per gram of surimi, the addition ratio of Na ascorbate is from 0.000005 to 0.01 u per gram of surimi, and the addition ratio of Na carbonate is 0.00192 g per gram of surimi, boiled fish paste cakes having preferred physical properties could be obtained even in the case where the blending ratio of surimi was 35 %. In addition, even in a lot of test samples in the surroundings thereof, the synergistic effect was confirmed, so that it was noted that the effect for enhancing the physical properties is high.

**Table 8**

| Test Sample | 1 | 2 | 3 | 4 | 5 | 6 | 7 |
|---|---|---|---|---|---|---|---|
| ASNa (q) | 0.000001 | 0.000002 | 0.000005 | 0.00005 | 0.00024 | 0.007 | 0.01 |
| TG (U) | | | | | | | |
| Na carbonate (q) | | | | | | | |
| rest Sample | 8 | 9 | 10 | 11 | 12 | 13 | 14 |
| ASNa (g) | 0.015 | | | | | | |
| TG (U) | | 0.001 | 0.002 | 0.010 | 0.068 | 0.100 | 0.300 |
| Na carbonate (g) | | | | | | | |
| Test Sample | 15 | 16 | 17 | 18 | 19 | 20 | 21 |
| ASNa (g) | | | | | 0.000001 | 0.000001 | 0.000001 |
| TG (U) | 0.500 | 1.000 | 1.250 | | 0.001 | 0.002 | 0.010 |
| Na carbonate (g) | | | | 0.00192 | 0.00192 | 0.00192 | 0.00192 |
| Test Sample | 22 | 23 | 24 | 25 | 26 | 27 | 28 |
| ASNa (g) | 0.000001 | 0.000001 | 0.000001 | 0.000001 | 0.000001 | 0.000001 | 0.000002 |
| TG (U) | 0.068 | 0.100 | 0.300 | 0.500 | 1.000 | 1.250 | 0.001 |
| Na carbonate (g) | 0.00192 | 0.00192 | 0.00192 | 0.00192 | 0.00192 | 0.00192 | 0.00192 |
| Test Sample | 29 | 30 | 31 | 32 | 33 | 34 | 35 |
| ASNa (g) | 0.000002 | 0.000002 | 0.000002 | 0.000002 | 0.000002 | 0.000002 | 0.000002 |
| TG (U) | 0.002 | 0.010 | 0.068 | 0.100 | 0.300 | 0.500 | 1.000 |
| Na carbonate (g) | 0.00192 | 0.00192 | 0.00192 | 0.00192 | 0.00192 | 0.00192 | 0.00192 |
| Test Sample | 36 | 37 | 38 | 39 | 40 | 41 | 42 |
| ASNa (g) | 0.000002 | 0.000005 | 0.000005 | 0.000005 | 0.000005 | 0.000005 | 0.000005 |
| TG (U) | 1.250 | 0.001 | 0.002 | 0.010 | 0.068 | 0.100 | 0.300 |
| Na carbonate (g) | 0.00192 | 0.00192 | 0.00192 | 0.00192 | 0.00192 | 0.00192 | 0.00192 |
| Test Sample | 43 | 44 | 45 | 46 | 47 | 48 | 49 |
| ASNa (g) | 0.000005 | 0.000005 | 0.000005 | 0.00005 | 0.00005 | 0.00005 | 0.00005 |
| TG (U) | 0.500 | 1.000 | 1.250 | 0.001 | 0.002 | 0.010 | 0.068 |
| Na carbonate (g) | 0.00192 | 0.00192 | 0.00192 | 0.00192 | 0.00192 | 0.00192 | 0.00192 |
| Test Sample | 50 | 51 | 52 | 53 | 54 | 55 | 56 |
| ASNa (g) | 0.00005 | 0.00005 | 0.00005 | 0.00005 | 0.00005 | 0.00024 | 0.00024 |
| TG (U) | 0.100 | 0.300 | 0.500 | 1.000 | 1.250 | 0.001 | 0.002 |
| Na carbonate (g) | 0.00192 | 0.00192 | 0.00192 | 0.00192 | 0.00192 | 0.00192 | 0.00192 |
| Test Sample | 57 | 58 | 59 | 60 | 61 | 62 | 63 |
| ASNa (g) | 0.00024 | 0.00024 | 0.00024 | 0.00024 | 0.00024 | 0.00024 | 0.00024 |
| TG (U) | 0.010 | 0.068 | 0.100 | 0.300 | 0.500 | 1.000 | 1.250 |
| Na carbonate (g) | 0.00192 | 0.00192 | 0.00192 | 0.00192 | 0.00192 | 0.00192 | 0.00192 |
| Test Sample | 64 | 65 | 66 | 67 | 68 | 69 | 70 |
| ASNa (g) | 0.007 | 0.007 | 0.007 | 0.007 | 0.007 | 0.007 | 0.007 |
| TG (U) | 0.001 | 0.002 | 0.010 | 0.068 | 0.100 | 0.300 | 0.500 |
| Na carbonate (g) | 0.00192 | 0.00192 | 0.00192 | 0.00192 | 0.00192 | 0.00192 | 0.00192 |
| Test Sample | 71 | 72 | 73 | 74 | 75 | 76 | 77 |
| ASNa (g) | 0.007 | 0.007 | 0.01 | 0.01 | 0.01 | 0.01 | 0.01 |
| TG (U) | 1.000 | 1.250 | 0.001 | 0.002 | 0.010 | 0.068 | 0.100 |
| Na carbonate (g) | 0.00192 | 0.00192 | 0.00192 | 0.00192 | 0.00192 | 0.00192 | 0.00192 |
| Test Sample | 78 | 79 | 80 | 81 | 82 | 83 | 84 |
| ASNa (g) | 0.01 | 0.01 | 0.01 | 0.01 | 0.015 | 0.015 | 0.015 |
| TG (U) | 0.300 | 0.500 | 1.000 | 1.250 | 0.001 | 0.002 | 0.010 |
| Na carbonate (g) | 0.00192 | 0.00192 | 0.00192 | 0.00192 | 0.00192 | 0.00192 | 0.00192 |
| Test Sample | 85 | 86 | 87 | 88 | 89 | 90 | |
| ASNa (g) | 0.015 | 0.015 | 0.015 | 0.015 | 0.015 | 0.015 | |
| TG (U) | 0.068 | 0.100 | 0.300 | 0.500 | 1.000 | 1.250 | |
| Na carbonate (g) | 0.00192 | 0.00192 | 0.00192 | 0.00192 | 0.00192 | 0.00192 | |

It was suggested from the foregoing results that in regions in which the addition ratio of TG is from 0.01 to 0.5 U per gram of surimi, the addition ratio of Na ascorbate is from 0.000005 to 0.01 g per gram of surimi, and the addition ratio of Na carbonate is 0.00192 g per gram of surimi, and preferably regions in which the addition amount of TG is from 0.01 to 0.3 U per gram of surimi, the addition amount of Na ascorbate is from 0.00005 to 0.001 g per gram of surimi, and the addition amount of Na carbonate is 0.00192 g per gram of surimi, even in the surimi blend of 35 %, preferred physical properties equal to those in the surimi blend of 40 % prior to cost saving are imparted, and a synergistic effect is exhibited. It was suggested that this effect is exhibited not only in fish paste products of U.S.A., in which high-grade surimi of, e.g. , Alaska pollack is used in a low blending ratio of surimi of from 30 to 40 %, but in fish paste products of Europe, East Asia, and Southeast Asia, in which low-grade surimi of, e.g., golden threadfin bream is used in a low blending ratio of surimi of from 30 to 40 %.

Casing boiled fish paste cakes in which the fish species was changed to only Alaska pollack or only golden threadfin bream, and three kinds of materials of transglutaminase, sodium carbonate, and an ascorbic acid compound were added were prepared by adopting the blend for the imitation crab meat shown in Table 1 as used in Example 1 in the same method as that in Example 1. As TG, Na ascorbate, and the alkali material, the same materials as those in Example 1 were used. The measurement of the effect was carried out in terms of the breaking strength that is an index of physical property evaluation exhibiting the firmness which is the most important index for the boiled fish paste cakes. For the measurement of the breaking strength, the same texture analyzer as that in Example 1 was used. As shown in Table 11, the effect to be brought due to a combined use when the addition ratio of TG was fixed, and the addition ratio of each of Na ascorbate and Na carbonate was changed was confirmed. In all of Test Samples 19 to 90 of Table 11 using three kinds of materials in combination, the synergistic effect regarding the breaking strength was analyzed.

In Test Samples 19 to 90 as a sample using TG, Na ascorbate, and Na carbonate in combination, the synergistic effect was analyzed. It was confirmed from Table 12 that in the case of using Alaska pollack as a fish species, the synergistic effect was confirmed in the test samples marked with "*" . Furthermore, the test samples having physical properties exceeding 265 g, a value of which is the breaking strength of the target product having a blending ratio of surimi of 40 %, are shown gray.

**Table 9**

| <Recipe of 35 % of Alaska pollack; results of sole addition of single kind of material> | | | | | | | | | |
|---|---|---|---|---|---|---|---|---|---|
| Test Sample | 1 | 2 | 3 | 4 | 5 | 6 | 7 | 8 | 9 |
| ASNa (g) | 0.000001 | 0.000002 | 0.000005 | 0.00005 | 0.00024 | 0.007 | 0.01 | 0.015 | |
| TG (U) | | | | | | | | | 0.001 |
| Na carbonate (g) | | | | | | | | | |
| Breaking strength (g) | 243.29 | 244.85 | 241.00 | 242.15 | 240.53 | 242.33 | 245.39 | 250.40 | 240.58 |
| Test Sample | 10 | 11 | 12 | 13 | 14 | 15 | 16 | 17 | 18 |
| ASNa (g) | | | | | | | | | |
| TG (U) | 0.002 | 0.010 | 0.068 | 0.100 | 0.300 | 0.500 | 1.000 | 1.250 | |
| Na carbonate (g) | | | | | | | | | 0.00192 |
| Breaking strength (g) | 242.24 | 250.09 | 257.24 | 259.05 | 264.40 | 267.00 | 256.06 | 249.26 | 243.2 |
| | | | | | | | | | |

| <Recipe of 35 % of Alaska pollack test sample of addition using three kinds of materials in combination> | | | | | | | | | |
|---|---|---|---|---|---|---|---|---|---|
| Use of 0.0019 g of Na carbonate per gram of surimi | | ASNa (g per gram of surimi) | | | | | | | |
| | | 0.000001 | 0.000002 | 0.000005 | 0.00005 | 0.00024 | 0.007 | 0.01 | 0.015 |
| TG (U per gram of surimi) | 0.001 | 19 | 28 | 37 | 46 | 55 | 64 | 73 | 82 |
| | 0.002 | 20 | 29 | 38 | 47 | 56 | 65 | 74 | 83 |
| | 0.010 | 21 | 30 | 39 | 48 | 57 | 66 | 75 | 84 |
| | 0.068 | 22 | 31 | 40 | 49 | 58 | 67 | 76 | 85 |
| | 0.100 | 23 | 32 | 41 | 50 | 59 | 68 | 77 | 86 |
| | 0.300 | 24 | 33 | 42 | 51 | 60 | 69 | 78 | 87 |
| | 0.500 | 25 | 34 | 43 | 52 | 61 | 70 | 79 | 88 |
| | 1.000 | 26 | 35 | 44 | 53 | 62 | 71 | 80 | 89 |
| | 1.250 | 27 | 36 | 45 | 54 | 63 | 72 | 81 | 90 |
| | | | | | | | | | |

| <Recipe of 35 % of Alaska pollack; results of addition using three kinds of materials in combination> | | | | | | | | | |
|---|---|---|---|---|---|---|---|---|---|
| Breaking strength (g) | | ASNa (g per gram of surimi) | | | | | | | |
| | | 0.000001 | 0.000002 | 0.000005 | 0.00005 | 0.00024 | 0.001 | 0.01 | 0.015 |
| TG (U per gram of surimi) | 0.001 | 246.01 | 247.25 | 252.49 | 247.35 | 246.06 | 260.30 | 259.30 | 255.30 |
| | 0.002 | 247.84 | 252.39 | 258.36 | 265.49 | 269.90 | 268.49 | 267.58 | 257.45 |
| | 0.010 | 251.02 | 254.39 | 267.46 | 270.02 | 278.04 | 270.40 | 269.40 | 256.49 |
| | 0.068 | 265.49 | 264.31 | 271.43 | 279.39 | 284.67 | 279.03 | 280.95 | 268.49 |
| | 0.100 | 261.11 | 260.29 | 275.38 | 284.29 | 285.63 | 282.24 | 281.46 | 263.40 |
| | 0.300 | 270.90 | 287.54 | 282.16 | 284.38 | 293.27 | 298.39 | 289.40 | 274.29 |
| | 0.500 | 275.50 | 275.95 | 286.21 | 273.25 | 281.42 | 285.39 | 280.30 | 274.50 |
| | 1.000 | 263.39 | 269.92 | 270.80 | 274.10 | 274.29 | 283.39 | 276.29 | 264.45 |
| | 1.250 | 259.71 | 257.43 | 250.20 | 253.29 | 258.58 | 269.66 | 250.39 | 243.39 |
| | | | | | | | | | |

| <Recipe of 35 % of Alaska pollack studies regarding synergistic effect> | | | | | | | | | |
|---|---|---|---|---|---|---|---|---|---|
| Breaking strength (g) | | ASNa (g per gram of surimi) | | | | | | | |
| | | 0.000001 | 0.000002 | 0.000005 | 0.00005 | 0.00024 | 0.001 | 0.01 | 0.015 |
| TG (U per gram of surimi) | 0.001 | | | * | | | * | * | |
| | 0.002 | | | * | * | * | * | * | |
| | 0.010 | | | * | * | * | * | * | |
| | 0.068 | | | * | * | * | * | * | |
| | 0.100 | | | * | * | * | * | * | |
| | 0.300 | | * | * | * | * | * | * | |
| | 0.500 | | | * | * | * | * | * | |
| | 1.000 | | * | * | * | * | * | * | |
| | 1.250 | | | | | | * | | |

**Table 10**

| <Recipe of 35 % of golden threadfin bream; results of sole addition of single kind of material> | | | | | | | | | |
|---|---|---|---|---|---|---|---|---|---|
| Test Sample | 1 | 2 | 3 | 4 | 5 | 6 | 7 | 8 | 9 |
| ASNa (g) | 0.000001 | 0.000002 | 0.000005 | 0.00005 | 0.00024 | 0.007 | 0.01 | 0.015 | |
| TG (U) | | | | | | | | | 0.001 |
| Na carbonate (g) | | | | | | | | | |
| Breaking strength (g) | 232.04 | 233.28 | 235.37 | 228.13 | 223.60 | 233.01 | 239.37 | 237.61 | 233.48 |
| Test Sample | 10 | 11 | 12 | 13 | 14 | 15 | 16 | 17 | 18 |
| ASNa (g) | | | | | | | | | |
| TG (U) | 0.002 | 0.010 | 0.068 | 0.100 | 0.300 | 0.500 | 1.000 | 1.250 | |
| Na carbonate (g) | | | | | | | | | 0.00192 |
| Breaking strength (g) | 240.29 | 247.29 | 242.93 | 246.58 | 270.49 | 276.58 | 288.40 | 310.00 | 218.3 |
| | | | | | | | | | |

| <Recipe of 35 % of golden threadfin bream; test sample of addition using three kinds of materials in combination> | | | | | | | | | |
|---|---|---|---|---|---|---|---|---|---|
| Test sample number using 0.00192 g of Na carbonate per gram of surimi | | ASNa (g per gram of surimi) | | | | | | | |
| | | 0.000001 | 0.000002 | 0.000005 | 0.00005 | 0.00024 | 0.007 | 0.01 | 0.015 |
| TG (U per gram of surimi) | 0.001 | 19 | 28 | 37 | 46 | 55 | 64 | 73 | 82 |
| | 0.002 | 20 | 29 | 38 | 47 | 56 | 65 | 74 | 83 |
| | 0.010 | 21 | 30 | 39 | 48 | 57 | 66 | 75 | 84 |
| | 0.068 | 22 | 31 | 40 | 49 | 58 | 67 | 76 | 85 |
| | 0.100 | 23 | 32 | 41 | 50 | 59 | 68 | 77 | 86 |
| | 0.300 | 24 | 33 | 42 | 51 | 60 | 69 | 78 | 87 |
| | 0.500 | 25 | 34 | 43 | 52 | 61 | 70 | 79 | 88 |
| | 1.000 | 26 | 35 | 44 | 53 | 62 | 71 | 80 | 89 |
| | 1.250 | 27 | 36 | 45 | 54 | 63 | 72 | 81 | 90 |
| | | | | | | | | | |

| <Recipe of 35 % of golden threadfin bream; results of addition using three kinds of materials in combination> | | | | | | | | | |
|---|---|---|---|---|---|---|---|---|---|
| Breaking strength (g) | | ASNa (g per gram of surimi) | | | | | | | |
| | | 0.000001 | 0.000002 | 0.000005 | 0.00005 | 0.00024 | 0.001 | 0.01 | 0.015 |
| TG (U per gram of surimi) | 0.001 | 222.95 | 226.40 | 222.21 | 224.99 | 222.30 | 220.48 | 220.39 | 219.49 |
| | 0.002 | 228.93 | 235.99 | 236.34 | 240.39 | 240.38 | 240.39 | 240.38 | 225.38 |
| | 0.010 | 246.29 | 255.49 | 256.59 | 255.46 | 256.68 | 255.28 | 256.38 | 234.20 |
| | 0.068 | 248.39 | 257.39 | 265.39 | 278.60 | 284.98 | 284.97 | 265.40 | 238.29 |
| | 0.100 | 259.40 | 259.05 | 264.69 | 273.19 | 284.03 | 284.38 | 267.90 | 247.23 |
| | 0.300 | 259.39 | 277.49 | 280.50 | 285.29 | 282.38 | 281.50 | 278.39 | 269.59 |
| | 0.500 | 280.30 | 291.39 | 299.49 | 290.59 | 295.30 | 293.49 | 309.39 | 270.49 |
| | 1.000 | 279.58 | 295.39 | #310.49 | #306.49 | #302.93 | 297.99 | 286.39 | 271.85 |
| | 1.250 | #308.29 | 290.30 | 290.93 | 294.59 | 290.15 | 287.10 | 285.10 | 270.10 |
| | | | | | | | | | |

| <Recipe of 35 % of golden threadfin bream; studies regarding synergistic effect> | | | | | | | | | |
|---|---|---|---|---|---|---|---|---|---|
| Breaking strength (g) | | ASNa (g per gram of surimi) | | | | | | | |
| | | 0.000001 | 0.000002 | 0.000005 | 0.00005 | 0.00024 | 0.001 | 0.01 | 0.015 |
| TG (U per gram of surimi) | 0.001 | | | | | | | | |
| | 0.002 | | * | * | * | * | * | * | |
| | 0.010 | * | * | * | * | * | * | * | |
| | 0.068 | * | * | * | * | * | * | * | |
| | 0.100 | * | * | * | * | * | * | * | |
| | 0.300 | | * | * | * | * | * | * | * |
| | 0.500 | * | * | * | * | * | * | * | * |
| | 1.000 | | * | #* | #* | #* | * | * | |
| | 1.250 | #* | | | | | | | |

| | | | | | | | | | |
|---|---|---|---|---|---|---|---|---|---|
| In the portion marked with "#", a hard feel due to TG is generated, so that the texture is poor. | | | | | | | | | |

**Table 11**

| Test Sample | 1 | 2 | 3 | 4 | 5 | 6 | 7 |
|---|---|---|---|---|---|---|---|
| ASNa (g) | 0.000001 | 0.000002 | 0.000005 | 0.00005 | 0.00024 | 0.001 | 0.01 |
| TG (U) | | | | | | | |
| Na carbonate (g) | | | | | | | |
| Test Sample | 8 | 9 | 10 | 11 | 12 | 13 | 14 |
| ASNa (g) | 0.015 | | | | | | |
| TG (U) | | 0.068 | | | | | |
| Na carbonate (g) | | | 0.00001 | 0.00003 | 0.00005 | 0.0002 | 0.005 |
| Test Sample | 15 | 16 | 17 | 18 | 19 | 20 | 21 |
| ASNa (g) | | | | | 0.000001 | 0.000001 | 0.000001 |
| TG (U) | | | | | 0.068 | 0.068 | 0.068 |
| Na carbonate (g) | 0.00192 | 0.01 | 0.02 | 0.03 | 0.00001 | 0.00003 | 0.00005 |
| Test Sample | 22 | 23 | 24 | 25 | 26 | 27 | 28 |
| ASNa (g) | 0.000001 | 0.000001 | 0.000001 | 0.000001 | 0.000001 | 0.000001 | 0.000002 |
| TG (U) | 0.068 | 0.068 | 0.0068 | 0.068 | 0.068 | 0.068 | 0.068 |
| Na carbonate (g) | 0.0002 | 0.005 | 0.0019 | 0.01 | 0.02 | 0.03 | 0.00001 |
| Test Sample | 29 | 30 | 31 | 32 | 33 | 34 | 35 |
| ASNa (g) | 0.000002 | 0.000002 | 0.000002 | 0.000002 | 0.000002 | 0.000002 | 0.000002 |
| TG (U) | 0.068 | 0.068 | 0.068 | 0.068 | 0.068 | 0.068 | 0.068 |
| Na carbonate (g) | 0.00003 | 0.00005 | 0.0002 | 0.005 | 0.00192 | 0.01 | 0.02 |
| Test Sample | 36 | 37 | 38 | 39 | 40 | 41 | 42 |
| ASNa (g) | 0.000002 | 0.000005 | 0.000005 | 0.000005 | 0.000005 | 0.000005 | 0.000005 |
| TG (U) | 0.068 | 0.068 | 0.068 | 0.068 | 0.068 | 0.068 | 0.068 |
| Na carbonate (g) | 0.03 | 0.00001 | 0.00003 | 0.00005 | 0.0002 | 0.005 | 0.00192 |
| Test Sample | 43 | 44 | 45 | 46 | 47 | 48 | 49 |
| ASNa (g) | 0.000005 | 0.000005 | 0.000005 | 0.00005 | 0.00005 | 0.00005 | 0.00005 |
| TG (U) | 0.068 | 0.068 | 0.068 | 0.068 | 0.068 | 0.068 | 0.068 |
| Na carbonate (g) | 0.01 | 0.02 | 0.03 | 0.00001 | 0.00003 | 0.00005 | 0.0002 |
| Test Sample | 50 | 51 | 52 | 53 | 54 | 55 | 56 |
| ASNa (g) | 0.00005 | 0.00005 | 0.00005 | 0.00005 | 0.00005 | 0.00024 | 0.00024 |
| TG (U) | 0.068 | 0.068 | 0.068 | 0.068 | 0.068 | 0.068 | 0.068 |
| Na carbonate (q) | 0.005 | 0.00192 | 0.01 | 0.02 | 0.03 | 0.00001 | 0.00003 |
| Test Sample | 57 | 58 | 59 | 60 | 61 | 62 | 63 |
| ASNa (g) | 0.00024 | 0.00024 | 0.00024 | 0.00024 | 0.00024 | 0.00024 | 0.00024 |
| TG (U) | 0.068 | 0.068 | 0.068 | 0.068 | 0.068 | 0.068 | 0.068 |
| Na carbonate (g) | 0.00005 | 0.0002 | 0.005 | 0.00192 | 0.01 | 0.02 | 0.03 |
| Test Sample | 64 | 65 | 66 | 67 | 68 | 69 | 70 |
| ASNa (g) | 0.001 | 0.001 | 0.001 | 0.001 | 0.001 | 0.001 | 0.001 |
| TG (U) | 0.068 | 0.068 | 0.068 | 0.068 | 0.068 | 0.068 | 0.068 |
| Na carbonate (g) | 0.00001 | 0.00003 | 0.00005 | 0.0002 | 0.005 | 0.00192 | 0.01 |
| Test Sample | 71 | 72 | 73 | 74 | 75 | 76 | 77 |
| ASNa (g) | 0.001 | 0.001 | 0.001 | 0.01 | 0.01 | 0.01 | 0.01 |
| TG (U) | 0.068 | 0.068 | 0.068 | 0.068 | 0.068 | 0.068 | 0.068 |
| Na carbonate (g) | 0.02 | 0.03 | 0.00001 | 0.00003 | 0.00005 | 0.0002 | 0.005 |
| Test Sample | 78 | 79 | 80 | 81 | 82 | 83 | 84 |
| ASNa (g) | 0.01 | 0.01 | 0.01 | 0.01 | 0.015 | 0.015 | 0.015 |
| TG (U) | 0.068 | 0.068 | 0.068 | 0.068 | 0.068 | 0.068 | 0.068 |
| Na carbonate (g) | 0.00192 | 0.01 | 0.02 | 0.03 | 0.00001 | 0.00003 | 0.00005 |
| Test Sample | 85 | 86 | 87 | 88 | 89 | 90 | |
| ASNa (g) | 0.015 | 0.015 | 0.015 | 0.015 | 0.015 | 0.015 | |
| TG (U) | 0.068 | 0.068 | 0.068 | 0.068 | 0.068 | 0.068 | |
| Na carbonate (g) | 0.0002 | 0.005 | 0.00192 | 0.01 | 0.02 | 0.03 | |

Furthermore, it was confirmed from Table 13 that in the case of a use of golden threadfin bream as a fish species, the synergistic effect was confirmed in the test samples marked with "*". Furthermore, the test samples having physical properties exceeding 255 g, a value of which is the breaking strength of the target product having a blending ratio of surimi of 40 %, are shown gray.

It is noted from Tables 12 and 13 that in the case of a use of any of Alaska pollack and golden threadfin bream, in all of test samples in regions which are not only shaded gray, wherein the target physical properties were achieved, but marked with "*" exhibiting the synergistic effect, namely, regions in which the addition ratio of TG is 0.068 U per gram of surimi, the addition ratio of Na ascorbate is from 0.000005 to 0.01 g per gram of surimi, and the addition ratio of Na carbonate is from 0.00003 to 0.005 g per gram of surimi, boiled fish paste cakes having preferred physical properties could be obtained even in the case where the blending ratio of surimi was 35 %. In addition, even in a lot of test samples in the surroundings thereof, the synergistic effect was confirmed, so that it was noted that the effect for enhancing the physical properties is high.

**Table 12**

| <Recipe of 35 % of Alaska pollack; results of sole addition of single kind of material> | | | | | | | | | |
|---|---|---|---|---|---|---|---|---|---|
| Test Sample | 1 | 2 | 3 | 4 | 5 | 6 | 7 | 8 | 9 |
| ASNa(g) | 0.000001 | 0.000002 | 0.000005 | 0.00005 | 0.00024 | 0.001 | 0.01 | 0.015 | |
| TG (U) | | | | | | | | | 0.068 |
| Na carbonate (g) | | | | | | | | | |
| Breaking strength (q) | 243.29 | 244.85 | 241.00 | 242.15 | 240.53 | 242.33 | 245.39 | 250.40 | 257.24 |
| Test Sample | 10 | 11 | 12 | 13 | 14 | 15 | 16 | 17 | 18 |
| ASNa (g) | | | | | | | | | |
| TG (U) | | | | | | | | | |
| Na carbonate (g) | 0.00001 | 0.00003 | 0.00005 | 0.0002 | 0.005 | 0.00192 | 0.01 | 0.02 | 0.03 |
| Breaking strength (g) | 238.30 | 239.86 | 241.80 | 242.05 | 243.24 | 253.43 | 244.59 | 242.84 | 235.53 |
| | | | | | | | | | |

| <Recipe of 35 % of Alaska pollack test sample of addition using three kinds of mate rials in com bination> | | | | | | | | | |
|---|---|---|---|---|---|---|---|---|---|
| Test sample using 0.068 U of TG per surimi | | ASNa (g per gram of surimi) | | | | | | | |
| | | 0.000001 | 0.000002 | 0.000005 | 0.00005 | 0.00024 | 0.001 | 0.01 | 0.015 |
| Na carbonate (g per gram of surimi) | 0.00001 | 19 | 28 | 37 | 46 | 55 | 64 | 73 | 82 |
| | 0.00003 | 20 | 29 | 38 | 47 | 56 | 65 | 74 | 83 |
| | 0.00005 | 21 | 30 | 39 | 48 | 57 | 66 | 75 | 84 |
| | 0.0005 | 22 | 31 | 40 | 49 | 58 | 67 | 76 | 85 |
| | 0.00192 | 23 | 32 | 41 | 50 | 59 | 68 | 77 | 86 |
| | 0.005 | 24 | 33 | 42 | 51 | 60 | 69 | 78 | 87 |
| | 0.01 | 25 | 34 | 43 | 52 | 61 | 70 | 79 | 88 |
| | 0.02 | 26 | 35 | 44 | 53 | 62 | 71 | 80 | 89 |
| | 0.03 | 27 | 36 | 45 | 54 | 63 | 72 | 81 | 90 |
| | | | | | | | | | |

| <Recipe of 35 % of Alaska pollack; results of addition using three kinds of materials in combination> | | | | | | | | | |
|---|---|---|---|---|---|---|---|---|---|
| Breaking strength (g) | | ASNa (g per gram of surimi) | | | | | | | |
| | | 0.000001 | 0.000002 | 0.000005 | 0.00005 | 0.00024 | 0.001 | 0.01 | 0.015 |
| Na carbonate (g per gram of surimi) | 0.00001 | 255.28 | 257.46 | 258.18 | 257.49 | 258.48 | 259.29 | 248.49 | 242.39 |
| | 0.00003 | 255.38 | 263.39 | 263.84 | 264.94 | 266.00 | 267.30 | 269.31 | 257.38 |
| | 0.00005 | 248.80 | 267.82 | 270.49 | 275.29 | 274.01 | 276.29 | 276.38 | 255.39 |
| | 0.0005 | 256.09 | 272.48 | 274.84 | 278.95 | 287.86 | 279.29 | 277.30 | 256.49 |
| | 0.00192 | 265.49 | 264.31 | 271.43 | 279.39 | 284.67 | 279.03 | 280.95 | 268.49 |
| | 0.005 | 257.00 | 274.40 | 278.09 | 279.58 | 286.73 | 276.26 | 279.39 | 263.40 |
| | 0.01 | 255.40 | 265.44 | 276.49 | 276.29 | 277.92 | 267.28 | 267.34 | 249.40 |
| | 0.02 | 252.39 | 262.90 | 267.88 | 266.29 | 266.15 | 264.29 | 257.39 | 245.35 |
| | 0.03 | 252.28 | 261.00 | 264.49 | 263.29 | 258.40 | 260.29 | 256.38 | 239.29 |
| | | | | | | | | | |

| <Recipe of 35 % of Alaska pollack; studies regarding synergistic effect> | | | | | | | | | |
|---|---|---|---|---|---|---|---|---|---|
| Breaking strength (g) | | ASNa (g per gram of surimi) | | | | | | | |
| | | 0.000001 | 0.000002 | 0.000005 | 0.00005 | 0.00024 | 0.001 | 0.01 | 0.015 |
| Na carbonate (g per gram of surimi) | 0.00001 | | | | | | | | |
| | 0.00003 | | * | * | * | * | * | * | |
| | 0.00005 | | * | * | * | * | * | * | |
| | 0.0005 | | * | * | * | * | * | * | |
| | 0.00192 | | | * | * | * | * | * | * |
| | 0.005 | | * | * | * | * | * | * | |
| | 0.01 | | | * | * | * | * | * | |
| | 0.02 | | * | * | * | * | * | * | |
| | 0.03 | | * | * | * | | * | | |

It was suggested from the foregoing results that in regions in which the addition ratio of TG is 0.068 U per gram of surimi, the addition ratio of Na ascorbate is from 0.000005 to 0.01 g per gram of surimi, and the addition ratio of Na carbonate is from 0.00003 to 0.005 g per gram of surimi, and preferably regions in which the addition amount of TG is 0.068 U per gram of surimi, the addition amount of Na ascorbate is from 0.00005 to 0.001g, and the addition amount of Na carbonate is from 0.00005 to 0.005 g per gram of surimi, the synergistic effect is exhibited not only in fish paste products of U.S.A. , in which high-grade surimi of, e.g., Alaska pollack is used in a low blending ratio of surimi of from 30 to 40 %, but in fish paste products of Europe, East Asia, and Southeast Asia, in which low-grade surimi of, e.g., golden threadfin bream is used in a low blending ratio of surimi of from 30 to 40 %.

**Table 13**

| <Recipe of 35 % of golden threadfin bream; results of sole addition of single kind of material> | | | | | | | | | |
|---|---|---|---|---|---|---|---|---|---|
| Test Sample | 1 | 2 | 3 | 4 | 5 | 6 | 7 | 8 | 9 |
| ASNa (g) | 0.000001 | 0.000002 | 0.000005 | 0.00005 | 0.00024 | 0.001 | 0.01 | 0.015 | |
| TG (U) | | | | | | | | | 0.068 |
| Na carbonate (g) | | | | | | | | | |
| Breaking strength (g) | 228.50 | 229.64 | 229.30 | 225.53 | 223.60 | 232.22 | 235.25 | 233.10 | 242.9 |
| Test Sample | 10 | 11 | 12 | 13 | 14 | 15 | 16 | 17 | 18 |
| ASNa(g) | | | | | | | | | |
| TG (U) | | | | | | | | | |
| Na carbonate (g) | 0.00001 | 0.00003 | 0.00005 | 0.0002 | 0.005 | 0.00192 | 0.01 | 0.02 | 0.03 |
| Breaking strength (g) | 234.01 | 233.95 | 231.40 | 235.39 | 218.28 | 219.49 | 219.60 | 220.49 | 222.25 |
| | | | | | | | | | |

| <Recipe of 35 % of golden threadfin bream; test sample of addition using three kinds of materials in combination> | | | | | | | | | |
|---|---|---|---|---|---|---|---|---|---|
| Test sample number using 0.068 U of TG per gram of surimi | | ASNa (g per gram of surimi) | | | | | | | |
| | | 0.000001 | 0.000002 | 0.000005 | 0.00005 | 0.00024 | 0.001 | 0.01 | 0.015 |
| Na carbonate (g per gram of surimi) | 0.00001 | #19 | #28 | #37 | #46 | #55 | #64 | #73 | #82 |
| | 0.00003 | #20 | #29 | #38 | #47 | #56 | #65 | #74 | #83 |
| | 0.00005 | #21 | #30 | #39 | #48 | #57 | #66 | #75 | #84 |
| | 0.0005 | #22 | #31 | #40 | #49 | #58 | #67 | #76 | #85 |
| | 0.00192 | #23 | #32 | #41 | #50 | #59 | #68 | #77 | #86 |
| | 0.005 | #24 | #33 | #42 | #51 | #60 | #69 | #78 | #87 |
| | 0.01 | #25 | #34 | #43 | #52 | #61 | #70 | #79 | #88 |
| | 0.02 | #26 | #35 | #44 | #53 | #62 | #71 | #80 | #89 |
| | 0.03 | #27 | #36 | #45 | #54 | #63 | #72 | #81 | #90 |
| | | | | | | | | | |

| <Recipe of 35 % of golden threadfin bream; results of addition using three kinds of materials in combination> | | | | | | | | | |
|---|---|---|---|---|---|---|---|---|---|
| Breaking strength (g) | | ASNa (q per gram of surimi) | | | | | | | |
| | | 0.000001 | 0.000002 | 0.000005 | 0.00005 | 0.00024 | 0.001 | 0.01 | 0.015 |
| Na carbonate (g per gram of surimi) | 0.00001 | 242.49 | 250.30 | 248.41 | 245.30 | 245.21 | 254.30 | 259.41 | 247.00 |
| | 0.00003 | 247.85 | 263.29 | 262.30 | 261.20 | 260.39 | 261.21 | 262.30 | 253.21 |
| | 0.00005 | 247.39 | 256.30 | 260.39 | 262.40 | 264.04 | 264.20 | 260.49 | 247.49 |
| | 0.0005 | 247.85 | 254.29 | 258.02 | 257.20 | 261.08 | 262.19 | 269.30 | 258.59 |
| | 0.00192 | 248.39 | 257.39 | 265.39 | 278.60 | 284.98 | 284.97 | 265.40 | 238.29 |
| | 0.005 | 257.39 | 260.54 | 269.33 | 260.34 | 273.03 | 263.29 | 262.38 | 259.57 |
| | 0.01 | 248.38 | 253.30 | 255.39 | 250.20 | 259.90 | 247.38 | 248.30 | 243.80 |
| | 0.02 | 233.23 | 240.31 | 235.10 | 240.85 | 242.45 | 244.97 | 242.40 | 243.29 |
| | 0.03 | 230.29 | 229.20 | 233.01 | 230.20 | 230.23 | 239.97 | 234.40 | 230.20 |
| | | | | | | | | | |

| <Recipe of 35 % of golden threadfin bream; studies regarding synergistic effect> | | | | | | | | | |
|---|---|---|---|---|---|---|---|---|---|
| Breaking strength (g) | | ASNa (g per gram of surimi) | | | | | | | |
| | | 0.000001 | 0.000002 | 0.000005 | 0.00005 | 0.00024 | 0.001 | 0.01 | 0.015 |
| Na carbonate (g per gram of surimi) | 0.00001 | | * | * | * | * | * | * | |
| | 0.00003 | * | * | * | * | * | * | * | * |
| | 0.00005 | | * | * | * | * | * | * | |
| | 0.0005 | | * | * | * | * | * | * | * |
| | 0.00192 | * | * | * | * | * | * | * | * |
| | 0.005 | | * | * | * | * | * | * | * |
| | 0.01 | * | * | * | * | * | * | * | * |
| | 0.02 | | * | * | * | * | * | * | * |
| | 0.03 | | | | | | * | | |

### EXAMPLE 3

In Example 2, in any of Alaska pollack and golden threadfin bream, the synergistic effect due to the addition of three kinds of materials of transglutaminase, Na carbonate, and Na ascorbate was exhibited. In order to examine whether or not in the case where the alkali material is Na carbonate, a stronger effect is revealed, an effect in the case of using tri-Na phosphate having a sodium ion which is the same cation as that in Na carbonate and K carbonate having a carbonate ion which is the same anion as that in Na carbonate was verified.

Casing boiled fish paste cakes in which the fish species was changed to only Alaska pollack or only golden threadfin bream, and in addition to transglutaminase and Na ascorbate, one kind of Na carbonate, tri-Na phosphate, and K carbonate was added were prepared by adopting the blend for the imitation crab meat shown in Table 1 as used in Example 1 in the same method as that in Example 1. As TG, Na ascorbate, and Na carbonate, the same materials as those in Example 1 were used. The measurement of the effect was carried out in terms of the breaking strength that is an index of physical property evaluation exhibiting the firmness which is the most important index for the boiled fish paste cakes. For the measurement of the breaking strength, the same texture analyzer as that in Example 1 was used.

**Table 14**

| <Test sample using Na carbonate> | | | | | | | |
|---|---|---|---|---|---|---|---|
| Test Sample | 1 | 2 | 3 | 4 | 5 | 6 | 7 |
| ASNa (g) | 0.00024 | | | | 0.00024 | 0.00024 | 0.00024 |
| TG (U) | | 0.068 | | 0.068 | | 0.068 | 0.068 |
| Na carbonate (g) | | | 0.00192 | 0.00192 | 0.00192 | | 0.00192 |

| <Test sample using tri-Na phosphate> | | | | | | | |
|---|---|---|---|---|---|---|---|
| Test Sample | 8 | 9 | 10 | 11 | 12 | 13 | 14 |
| ASNa (g) | 0.00024 | | | | 0.00024 | 0.00024 | 0.00024 |
| TG (U) | | 0.068 | | 0.068 | | 0.068 | 0.068 |
| Tri-Na phosphate (g) | | | 0.00192 | 0.00192 | 0.00192 | | 0.00192 |

| <Test sample using K carbonate> | | | | | | | |
|---|---|---|---|---|---|---|---|
| Test Sample | 15 | 16 | 17 | 18 | 19 | 20 | 21 |
| ASNa (g) | 0.00024 | | | | 0.00024 | 0.00024 | 0.00024 |
| TG (U) | | 0.068 | | 0.068 | | 0.068 | 0.068 |
| K carbonate (g) | | | 0.00192 | 0.00192 | 0.00192 | | 0.00192 |

In samples using Na ascorbate and an alkali material (Na carbonate, tri-Na phosphate, or K carbonate) in combination, the synergistic effect at the time of adding three kinds of materials (TG, Na ascorbate, and an alkali material) was analyzed. As a result, in the test samples shown gray in Table 15, the synergistic effect was confirmed. However, only the test sample of addition of three kinds of materials of TG, Na ascorbate, and Na carbonate met the target breaking strength of 265 g or more in the case of using surimi of Alaska pollack described in Example 2. In the test sample of addition of three kinds of materials using Na carbonate, it was suggested that the synergistic effect is exhibited in fish paste products of U.S.A., in which high-grade surimi of, e.g., Alaska pollack is used in a low blending ratio of surimi of from 30 to 40 %. Under the present condition, only Na carbonate revealed the synergistic effect at the time of using three kinds of materials, and although other alkali materials exhibited high effects, they did not reveal the synergistic effect and did not meet the target breaking strength of 265 g.

**Table 15**

| Recipe usinq 35 % of Alaska pollack | | | |
|---|---|---|---|
| <Test sample using Na carbonate> | | | |
| | Breaking strength (g) | | |
| Test Sample | Measured value | Difference from non-added sample | Theoretical value |
| Not added | 239.1 | | |
| TG | 257.2 | 18.11 | |
| ASNa | 240.5 | 1.40 | |
| Na carbonate | 243.2 | 4.11 | |
| TG and Na carbonate | 263.8 | 24.71 | 22.22 |
| Na carbonate and ASNa | 258.7 | 19.61 | 5.50 |
| ASNa and TG | 258.8 | 19.64 | 19.51 |
| TG, ASNa, and Na carbonate | 284.7 | 45.54 | 23.62 |
| | | | |

| <Test sample using tri-Na phosphate> | | | |
|---|---|---|---|
| | Breaking strength (g) | | |
| Test Sample | Measured value | Difference from non-added sample | Theoretical value |
| Not added | 239.1 | | |
| TG | 257.2 | 18.11 | |
| ASNa | 240.5 | 1.40 | |
| Tri-Na phosphate | 249.0 | 9.90 | |
| TG and tri-Na phosphate | 256.8 | 17.71 | 28.01 |
| Tri-Na phosphate and ASNa | 250.7 | 11.61 | 11.30 |
| ASNa and TG | 258.8 | 19.64 | 19.51 |
| TG, ASNa, and tri-Na phosphate | 261.8 | 22.70 | 29.41 |
| | | | |

| <Test sample using K carbonate> | | | |
|---|---|---|---|
| | Breaking strength (g) | | |
| Test Sample | Measured value | Difference from non-added sample | Theoretical value |
| Not added | 239.1 | | |
| TG | 257.2 | 18.11 | |
| AS | 240.5 | 1.40 | |
| K carbonate | 245.2 | 6.07 | |
| TG and K carbonate | 259.5 | 20.32 | 24.18 |
| K carbonate and ASNa | 245.7 | 6.57 | 7.46 |
| ASNa and TG | 258.8 | 19.64 | 19.51 |
| TG, ASNa, and K carbonate | 259.0 | 19.87 | 25.58 |

From Table 16, in samples using TG, Na ascorbate, and an alkali material (Na carbonate, tri-Na phosphate, or K carbonate) in combination, the synergistic effect at the time of adding three kinds of materials (TG, Na ascorbate, and an alkali material) was analyzed. As a result, in the test samples shown gray in Table 16, the synergistic effect was confirmed. In the test sample of addition of three kinds of materials using Na carbonate, tri-Na phosphate, or K carbonate, it was suggested that the synergistic effect is exhibited in fish paste products of Europe, East Asia, and Southeast Asia, in which low-grade surimi of, e.g., golden threadfin bream is used in a low blending ratio of surimi of from 30 to 40 %. Under the present condition, the synergistic effect was exhibited in the investigated three kinds of alkali materials. However, the breaking strength in the test sample of addition of three kinds of materials using tri-Na phosphate or K carbonate was close to a target lower limit value of 255 g of golden threadfin bream described in Example 2, whereas the breaking strength in the test sample of addition of three kinds of materials using Na carbonate was 285 g. In the golden threadfin bream, the synergistic effect was revealed so far as the material is an alkali material; however, the alkali material exhibiting the same synergistic effect even in fish species living in cold water, such as Alaska pollack, was only Na carbonate. Accordingly, Na carbonate was markedly superior to other alkali materials.

**Table 16**

| Recipe using 35 % of golden threadfin bream | | | |
|---|---|---|---|
| <Test sample using Na carbonate> | | | |
| | Breaking strength (g) | | |
| Test Sample | Measured value | Difference from non-added sample | Theoretical value |
| Not added | 229.1 | | |
| TG | 242.9 | 13.85 | |
| ASNa | 223.6 | -5.49 | |
| Na carbonate | 218.3 | -10.80 | |
| TG and Na carbonate | 247.3 | 18.21 | 3.04 |
| Na carbonate and ASNa | 223.3 | -5.79 | -16.29 |
| ASNa and TG | 242.1 | 13.03 | 8.36 |
| TG, ASNa, and Na carbonate | 285.0 | 55.90 | -2.44 |
| | | | |

| <Test sample using tri-Na phosphate> | | | |
|---|---|---|---|
| | Breaking strength (g) | | |
| Test Sample | Measured value | Difference from non-added sample | Theoretical value |
| Not added | 229.1 | | |
| TG | 242.9 | 13.85 | |
| ASNa | 223.6 | -5.49 | |
| Tri-Na phosphate | 229.2 | 0.16 | |
| TG and tri-Na phosphate | 245.3 | 16.21 | 14.01 |
| Tri-Na phosphate and ASNa | 221.1 | -7.95 | -5.32 |
| ASNa and TG | 242.1 | 13.03 | 8.36 |
| TG, ASNa, and tri-Na phosphate | 256.8 | 27.69 | 8.52 |
| | | | |

| <Test sample using K carbonate> | | | |
|---|---|---|---|
| | Breaking strength (g) | | |
| Test Sample | Measured value | Difference from non-added sample | Theoretical value |
| Not added | 229.1 | | |
| TG | 242.9 | 13.85 | |
| ASNa | 223.6 | -5.49 | |
| K carbonate | 227.1 | -1.97 | |
| TG and K carbonate | 244.6 | 15.48 | 11.87 |
| K carbonate and ASNa | 222.1 | -6.98 | -7.46 |
| ASNa and TG | 242.1 | 13.03 | 8.36 |
| TG, ASNa, and K carbonate | 255.8 | 26.69 | 6.39 |

### EXAMPLE 4

In fish paste manufacturers in Europe and North America, boiled fish paste products having a low blending ratio of surimi in the vicinity of from 35 % to 40 % are frequently produced. On the other hand, in fish paste manufactures in Japan, boiled fish paste products having a high blending ratio of surimi of 45 % or more are frequently produced. In order to confirm the effect due to a use of three kinds of materials in combination depending upon a difference in the blending ratio of surimi of a fish paste recipe, casing boiled fish paste products were prepared by adopting a recipe in which golden threadfin bream as a representative of the warm water fish species and Alaska pollack as a representative of the cold water fish species, respectively are used and the blending ratio of surimi is 45 %, as shown in Table 17 in the same method as that in Example 1. As a test sample, three kinds of materials of transglutaminase, Na carbonate, and Na ascorbate were added. As TG, Na ascorbate, and the alkali material (Na carbonate), the same materials as those in Example 1 were used. With respect to the obtained data regarding the breaking strength, on the basis of the results obtained in a sample added with only TG, a sample added with only Na ascorbate, and a sample added with only Na carbonate, a theoretical breaking strength in a sample added with three kinds of materials in combination was calculated, and it was analyzed on whether or not the synergistic effect was confirmed.

**Table 17**

| <Recipe using 45 % of Alaska pollack or golden threadfin bream> | | | | | | | |
|---|---|---|---|---|---|---|---|
| Raw material name | | | | | Blending ratio | Relative to surimi | Blending amount (g) |
| Surimi (Alaska pollack or golden threadfin bream) | | | | | 45.0% | 100.0 % | 1750 |
| Starch (potato, wheat, and tapioca) | | | | | 10.0% | 22.2% | 500 |
| Foreign protein (soybean and albumen) | | | | | 3.0% | 6.7% | 150 |
| Seasoning (salt, AJINOMOTO^{®}, and safflower oil) | | | | | 5.0% | 11.1% | 250 |
| Ice water 1 (added simultaneously at the time of adding salt) | | | | | 18.5% | 41.1% | 1175 |
| Ice water 2 (added simultaneously at the time of adding seasoning) | | | | | 18.5% | 41.1% | 1175 |
| Total | | | | | 100% | 222.2 % | 5000 |
| | | | | | | | |

| <Test sample of addition of three kinds of materials> | | | | | | | |
|---|---|---|---|---|---|---|---|
| Test Sample | 1 | 2 | 3 | 4 | 5 | 6 | 7 |
| ASNa (g) | 0.00024 | | | | 0.00024 | 0.00024 | 0.00024 |
| TG (U) | | 0.068 | | 0.068 | | 0.068 | 0.068 |
| Na carbonate (g) | | | 0.00192 | 0.00192 | 0.00192 | | 0.00192 |

In the sample using TG, Na ascorbate, and Na carbonate in combination, the synergistic effect was analyzed. As a result, in the test samples shown gray in Table 18, the synergistic effect was confirmed. In any of the case of using high-grade surimi of, e.g., Alaska pollack and the case of using low-grade surimi of, e.g., golden threadfin bream, it was suggested that TG, Na ascorbate, and Na carbonate exhibited the synergistic effect in fish paste products of a recipe having a high blending ratio of surimi of 45 % or more as in Japan.

**Table 18**

| <Recipe of 45 % of Alaska pollack> | | | |
|---|---|---|---|
| | Breaking strength (g) | | |
| Test Sample | Measured value | Difference from non-added sample | Theoretical value |
| Not added | 342.0 | | |
| TG | 371.4 | 29.4 | |
| ASNa | 351.2 | 9.2 | |
| Na carbonate | 350.3 | 8.3 | |
| TG and Na carbonate | 375.1 | 33.1 | 37.7 |
| Na carbonate and ASNa | 354.2 | 12.2 | 17.5 |
| ASNa and TG | 375.5 | 33.5 | 38.6 |
| TG, ASNa, and Na carbonate | 390.1 | 48.1 | 46.90 |

| <Recipe of 45 % of golden threadfin bream> | | | |
|---|---|---|---|
| | Breaking strength (g) | | |
| Test Sample | Measured value | Difference from non-added sample | Theoretical value |
| Not added | 321.6 | | |
| TG | 385.3 | 63.8 | |
| AScNa | 334.5 | 12.9 | |
| Na carbonate | 313.4 | -8.2 | |
| TG and Na carbonate | 390.7 | 69.2 | 55.6 |
| Na carbonate and ASNa | 325.3 | 3.8 | 4.7 |
| ASNa and TG | 386.7 | 65.2 | 76.7 |
| TG, ASNa, and Na carbonate | 395.7 | 74.2 | 68.5 |

### INDUSTRIAL APPLICABILITY

According to the present invention, not only in the case of using high-grade surimi (for example, surimi of Alaska pollack) but in the case of using low-grade surimi (for example, surimi of golden threadfin bream) and the case of a low blending ratio of surimi, sufficient firmness and flexibility can be imparted to fish paste products, and therefore, the present invention is extremely useful in the field of food products.

## Claims

1. A process for production of a fish paste product comprising using transglutaminase, an alkali material, and an ascorbic acid compound.

2. The process according to claim 1, wherein an amount of the transglutaminase is from 0.002 to 1.0 U per gram of raw material surimi, an amount of the alkali material is from 0.00003 g to 0.02 g per gram of raw material surimi, and an amount of the ascorbic acid compound is from 0.000002 g to 0.01 g per gram of raw material surimi.

3. The process according to claim 1, wherein an amount of the transglutaminase is from 0.005 to 1.0 U per gram of raw material surimi; an amount of the alkali material is from 0.00003 g to 0.005 g per gram of raw material surimi; and the ascorbic acid compound is sodium ascorbate, and an amount of the sodium ascorbate is from 0.000005 g to 0.01 g per gram of raw material surimi.

4. The process according to claim 1, wherein an amount of the transglutaminase is from 0.2 to 500,000 U per gram of the ascorbic acid compound, and an amount of the alkali material is from 0.003 to 10, 000 g per gram of the ascorbic acid compound.

5. The process according to claim 1, wherein an amount of the transglutaminase is from 0.2 to 200, 000 U per gram of the ascorbic acid compound, and an addition amount of the alkali material is from 0.003 to 1,000 g per gram of the ascorbic acid compound.

6. The process according to claim 1, wherein the alkali material is sodium carbonate.

7. The process according to claim 1, wherein an amount of raw material surimi to be used for the production of a fish paste product is 30 g or more and less than 40.0 g based on 100 g of a total sum of all of raw materials.

8. The process according to claim 1, wherein Alaska pollack, golden threadfin bream, golden threadfin bream, or a mixture thereof is used as raw material surimi.

9. An enzyme preparation for modifying a fish paste product containing transglutaminase, an alkali material, and an ascorbic acid compound as active ingredients.

10. The enzyme preparation according to claim 9, wherein an amount of the transglutaminase is from 0.2 to 500,000 U per gram of the ascorbic acid compound, and an amount of the alkali material is from 0.003 to 10,000 g per gram of the ascorbic acid compound.

11. The enzyme preparation according to claim 9, wherein an amount of the transglutaminase is from 0.2 to 200,000 U per gram of the ascorbic acid compound, and an addition amount of the alkali material is from 0.003 to 1,000 g per gram of the ascorbic acid compound.

12. The enzyme preparation according to claim 9, wherein the ascorbic acid compound is sodium ascorbate, and the alkali material is sodium carbonate.
